# EUROPEAN PATENT SPECIFICATION

(11) **EP 3 670 861 B1**
(45) Date of publication and mention of the grant of the patent: **01.05.2024**
(21) Application number: 19217181.7
(22) Date of filing: 17.12.2019
(51) Int. Cl.: F02C 6/16, F01D 25/26, F02C 7/24, F02C 7/27

(54) **INTEGRATED ADDITIVE CAVITY FOR CHARGING AND INSULATION OF SMALL ATTRITABLE ENGINE**
INTEGRIERTE ADDITIV HERGESTELLTE AUSNEHMUNG ZUR AUFLADUNG UND ISOLIERUNG VON KLEINEN EINWEGSMASCHINEN
CAVITÉ INTÉGRÉE DE CHARGEMENT ET D'ISOLATION DE PETIT MOTEUR SACRIFIABLE

(30) Priority: 17.12.2018 US 201816222049
(43) Date of publication of application: 24.06.2020
(73) Proprietor: RTX Corporation, Farmington, CT 06032 (US)
(72) Inventor: BOYER, Jesse R., Middletown, CT Connecticut 06457 (US); BINEK, Lawrence, Glastonbury, CT Connecticut 06033 (US); SHARMA, Om P., South Windsor, CT Connecticut 06074 (US); BUTCHER, Evan, Suffield, CT Connecticut 06078 (US); DODS, Bryan G., Greer, SC South Carolina 29651 (US); JAGDALE, Vijay Narayan, South Windsor, CT Connecticut 06074 (US)
(74) Representative: Dehns

(56) References cited:
- US-A- 5 218 822
- US-A1- 2003 131 607
- US-A1- 2010 162 704
- US-A1- 2016 290 164

## Description

### BACKGROUND

The present disclosure is directed to a casing having a unitary charging volume and insulation for attritable engine applications.

Attritable or expendable propulsion systems have a short lifespan relative to typical flight applications. The attritable engine is utilized for a limited lifespan and disposed. The attritable gas turbine engine may not even be operated through a full operational cycle. The attritable gas turbine engine may only perform start-up, and operational load before being decommissioned.

Since the operational modes of the attritable gas turbine engine may be significantly less than the conventional gas turbine engine, the attritable engine does not need to meet the same durability or safety requirements as the conventional gas turbine engine. Conventional gas turbine engine manufacturing techniques deployed for attritable engines can be more costly and more complex than needed. Since conventional manufacturing techniques can be more costly, additive manufacturing techniques may be deployed in substitute to reduce cost and complexity of the attritable gas turbine engine.

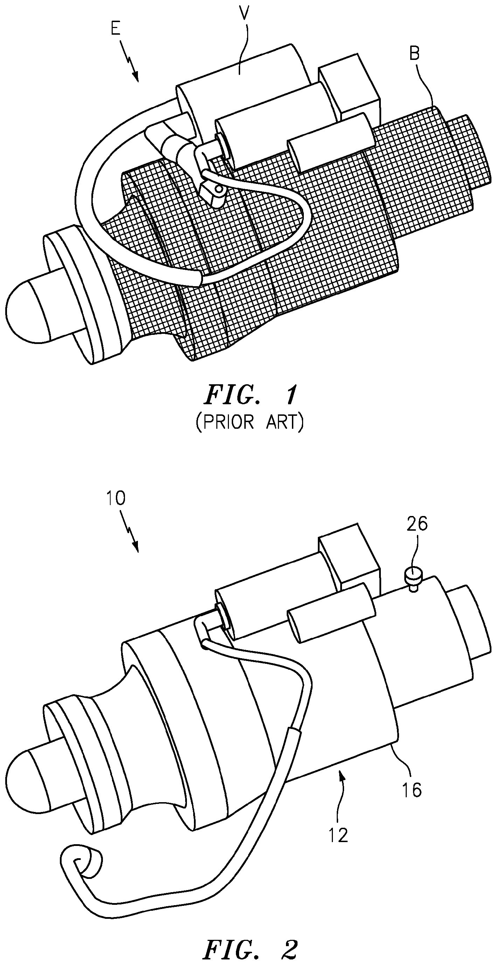

For a prior art small attritable engine E as shown in Fig. 1, the gas turbine engine E requires a charge of compressed air to initially start the gas turbine engine E. The initial charge of compressed air requires a portable volume of air to start the engine. This volume is conventionally held in a separate pressure vessel V attached to the attritable engine E. The separate pressure vessel V adds weight, cost and part count to the attritable engine design.

Additionally, the small attritable engine E as shown in Fig. 1, includes a separate insulation blanket B wrapped around the casing. The insulation blanket B reduces the heat transfer from the hot sections located inboard of the gas turbine engine to the exterior of the casing. The insulation blanket B is also an additional part or can be multiple parts assembled with the attritable gas turbine engine E.

Another prior art engine is shown in US 2003/131607 A1.

What is needed is an additively integrated unitary charging volume with the casing for attritable engine applications that can eliminate the need for a separate pressure vessel to contain the initial charge of air or a separate insulating blanket for thermal management of the engine.

US2016290164A1 discloses a method for additive manufacturing of a gas turbine casing part, US2010162704A1 discloses systems, apparatuses, and methods of harnessing thermal energy of gas turbine engines.

### SUMMARY

In accordance with the present disclosure, there is provided a casing with a unitary charging volume for an attritable gas turbine engine in accordance with claim 1.

In an embodiment, the unitary charging volume comprises a structure formed unitary with the casing configured to insulate the attritable gas turbine engine.

In any of the above embodiments, the unitary charging volume is located integrally throughout the casing.

In any of the above embodiments, the unitary charging volume is configured to contain a predetermined charge of compressed air utilized to initiate a start-up of the attritable gas turbine engine.

In any of the above embodiments, the unitary charging volume comprises the same material composition as the casing.

In any of the above embodiments, the casing with a unitary charging volume further comprises at least one spar extending between the interior wall and the exterior wall within the unitary charging volume.

In accordance with the present disclosure, there is provided a process for forming an attritable gas turbine engine casing with a unitary charging volume in accordance with claim 7.

In any of the above embodiments, forming the casing and the unitary charging volume comprises model-based additive manufacturing techniques.

In any of the above embodiments, the step of forming the unitary charging volume comprises changing process parameters to produce the unitary charging volume within the casing between the interior wall and the exterior wall.

In any of the above embodiments, the process further comprises determining the insulation value of the unitary charging volume.

In any of the above embodiments, the unitary charging volume comprises the same material composition as the casing.

In any of the above embodiments, the process further comprises determining a predetermined internal stress of the unitary charging volume; building a file generator; and determining the finite element solution of the internal stress.

In any of the above embodiments, the process further comprises locating at least one spar between the interior wall and the exterior wall responsive to the steps of determining the predetermined internal stress of the unitary charging volume.

There is an opportunity to leverage additive manufacturing (AM) techniques to improve various aspects of these limited-life products' lifecycles. These aspects include unitizing assembly details, integration of complex performance-enhancing features, lowering production costs, and reducing time to delivery; typically prohibitive when leveraging conventional manufacturing techniques.

Other details of the casing unitary charging volume and insulation are set forth in the following detailed description and the accompanying drawings wherein like reference numerals depict like elements.

### BRIEF DESCRIPTION OF THE DRAWINGS

Fig. 1 an isometric view of a schematic representation of a prior art attritable gas turbine engine.
Fig. 2 is an isometric view of a schematic representation of an exemplary attritable gas turbine engine.
Fig. 3 is a schematic representation of a cross section of an exemplary attritable gas turbine engine casing with unitary charging volume and insulation.

### DETAILED DESCRIPTION

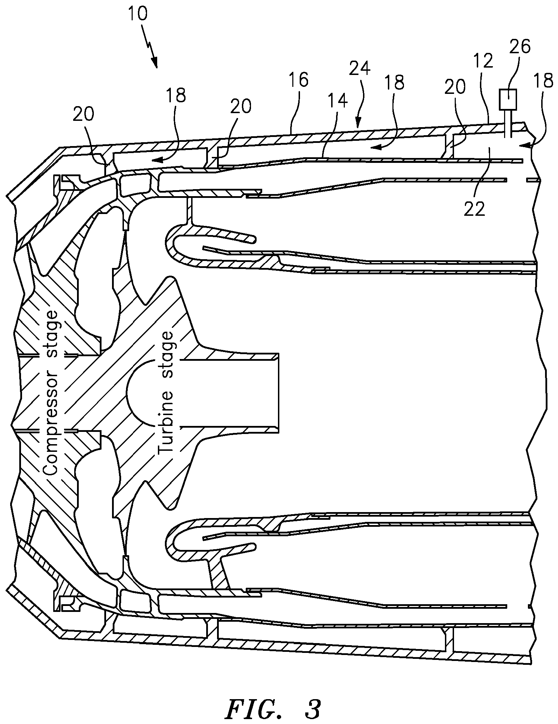

Referring now to Fig. 2 and Fig. 3, there is illustrated an exemplary attritable gas turbine engine 10, with a compressor stage and a turbine stage. The turbine engine section 10 can include a casing 12. The casing includes an interior wall 14 and an exterior wall 16 defining a cavity or charging volume 18 between the interior wall 14 and exterior wall 16.

The interior wall 14 and exterior wall 16 can be coupled and supported by spars 20 that are configured to structurally support the casing unitary charging volume 18. The casing unitary charging volume 18 can be constructed as a single or as multiple separate compartments 22 throughout the casing 12. The spars 20 can allow for air to pass from compartment 22 to compartment 22.

The casing unitary charging volume 18 is unitary with the casing 12. The casing unitary charging volume 18 can be located integrally throughout the casing 12. The casing unitary charging volume 18 can also serve as insulation 24 for the gas turbine engine 10. The casing unitary charging volume 18 has excellent thermal insulating properties due to the limited convection from limited fluid flow through the casing unitary charging volume 18. The insulating properties of the casing unitary charging volume 18 can be maintained after the initial compressed charge of air is utilized to start the gas turbine engine, since the casing unitary charging volume 18 will be substantially devoid of compressed air. The casing unitary charging volume 18 serves to reduce heat transfer from the hotter interior wall 14 to the cooler exterior wall 16.

A coupling 26 is coupled to the casing 12, such as at the exterior wall 16. The coupling 26 is configured to attach a source of compressed air (not shown) to receive the charge of compressed air for the casing unitary charging volume 18. In an exemplary embodiment, the charge of compressed air can be sized to provide an impulse of energized air sufficient to start the gas turbine engine. A predetermined charge of compressed air can be utilized to initiate the start-up of the attritable gas turbine engine. Discharged gas from the unitary charging volume is configured to exit into the structure prior or at the compressor stage. This will result in the rotative assembly rotating. The gas charge would be sized to the rotative assembly so as to generate enough rotational inertia.

The casing unitary charging volume 18 can be formed along with the casing 12 by use of additive manufacturing. In an exemplary embodiment, the casing unitary charging volume 18 can be formed utilizing model-based additive manufacturing techniques. Those exemplary additive manufacturing techniques can include changing process parameters to produce the casing unitary charging volume and insulation 18 within the casing 12.

In an exemplary embodiment, the casing 12 with the unitary charging volume 18 can be formed as one utilizing model-based additive manufacturing techniques. The additive manufacturing techniques can include changing process parameters to produce the unitary charging volume 18 within the casing 12 between the interior wall 14 and the exterior wall 16. The additive manufacturing techniques can include determining the insulation value of the unitary charging volume. Dimensioning the unitary charging volume to accommodate that insulation value. The additive manufacturing techniques can include determining predetermined an internal stress of said unitary charging volume, building a file generator; and determining the finite element solution of the internal stress. The analysis above can help with locating at least one spar between said interior wall and said exterior wall.

Additive manufacturing of the unitary charging volume can be done employing direct energy deposition or laser powder bed fusion. Using direct energy deposition, it is possible to build sections of the structure in dissimilar metals which are weldable. A laser powder bed approach would result in the unitary charging volume, integrated with the wall casings being built at the same time.

The casing unitary charging volume and insulation provides the advantage of customization of the internal geometry of the additive unitary charging volume for unique insulating efficiencies via heat exchanging/insulating features.

The casing unitary charging volume and insulation provides the advantage of utilizing additive manufacturing to enable thin walls and a capability to create complex geometries not traditionally achievable via casting or machining.

The casing unitary charging volume and insulation provides the advantage of geometries to potentially customize the insulating needs of the attritable engine.

The casing unitary charging volume and insulation provides the advantage of cost reduction via the reduction of the number of parts and assembly.

There has been provided a casing with an integral additive unitary charging volume and insulation for attritable engine applications. While the casing unitary charging volume and insulation has been described in the context of specific embodiments thereof, other unforeseen modifications and variations may become apparent to those skilled in the art having read the foregoing description. Accordingly, it is intended to embrace those modifications and variations which fall within the scope of the appended claims.

## Claims

1. A casing (12) with a unitary charging volume (18) for an attritable gas turbine engine (10) comprising:
the unitary charging volume (18) defined within said casing (12) of the gas turbine engine (10);
the unitary charging volume (18) comprising an exterior wall (16) and an interior wall (14) opposite said exterior wall (16) ;
the unitary charging volume (18) being formed integrally with said casing (12); and
a coupling (26) attached to said casing (12) configured to attach a source of compressed air to receive a charge of compressed air for said casing unitary charging volume (18).

2. The casing (12) with a unitary charging volume (18) according to claim 1, wherein said unitary charging volume (18) comprises a structure (24) formed unitary with the casing (12) configured to insulate said attritable gas turbine engine (10).

3. The casing (12) with a unitary charging volume (18) according to claim 1 or 2, wherein said unitary charging volume (18) is located integrally throughout the casing (12).

4. The casing (12) with a unitary charging volume (18) according to any preceding claim, wherein said unitary charging volume (18) is configured to contain a predetermined charge of compressed air utilized to initiate a start-up of the attritable gas turbine engine (10).

5. The casing (12) with a unitary charging volume (18) according to any preceding claim, wherein said unitary charging volume (18) comprises the same material composition as said casing (12).

6. The casing (12) with a unitary charging volume (18) according to any preceding claim, further comprising:
at least one spar extending between said interior wall (14) and said exterior wall (16) within said unitary charging volume (18) .

7. A process for forming an attritable gas turbine engine casing (12) with a unitary charging volume (18) comprising:
forming a casing (12) having an interior wall (14) and an exterior wall (16) opposite said interior wall (14);
forming a unitary charging volume (18) integral with said casing (12) between said interior wall (14) and said exterior wall (16); and
forming a coupling (26) attached to said casing (12) configured to attach a source of compressed air to receive a charge of compressed air for said casing unitary charging volume (18),
wherein said unitary charging volume (18) is configured to contain a predetermined charge of compressed air utilizable for initiating a start-up of the attritable gas turbine engine (10).

8. The process of claim 7, wherein forming said casing (12) and said unitary charging volume (18) comprises model-based additive manufacturing techniques.

9. The process of claim 7 or 8, wherein forming said unitary charging volume (18) comprises:
changing process parameters to produce said unitary charging volume (18) within said casing (12) between said interior wall (14) and said exterior wall (16).

10. The process of claim 7, 8, or 9, further comprising:
determining the insulation value of the unitary charging volume (18).

11. The process of any of claims 7 to 10, wherein said unitary charging volume (18) comprises the same material composition as said casing (12).

12. The process of any of claims 7 to 11, further comprising:
determining a predetermined internal stress of said unitary charging volume (18);
building a file generator; and
determining the finite element solution of the internal stress.

13. The process of claim 12, further comprising:
locating at least one spar between said interior wall (14) and said exterior wall (16) responsive to the steps of claim 12.

## Patentansprüche

1. Gehäuse (12) mit einem einheitlichen Ladevolumen (18) für ein Einweg-Gasturbinentriebwerk (10), umfassend:
das innerhalb des Gehäuses (12) des Gasturbinentriebwerks (10) definierte einheitliche Ladevolumen (18);
wobei das einheitliche Ladevolumen (18) eine Außenwand (16) und eine der Außenwand (16) gegenüberliegende Innenwand (14) umfasst;
wobei das einheitliche Ladevolumen (18) einstückig mit dem Gehäuse (12) ausgebildet ist; und
eine an dem Gehäuse (12) angebrachte Kupplung (26), die dazu konfiguriert ist, eine Druckluftquelle anzubringen, um eine Druckluftladung für das einheitliche Gehäuseladevolumen (18) aufzunehmen.

2. Gehäuse (12) mit einem einheitlichen Ladevolumen (18) nach Anspruch 1, wobei das einheitliche Ladevolumen (18) eine Struktur (24) umfasst, die einheitlich mit dem Gehäuse (12) ausgebildet und dazu konfiguriert ist, das Einweg-Gasturbinentriebwerk (10) zu isolieren.

3. Gehäuse (12) mit einem einheitlichen Ladevolumen (18) nach Anspruch 1 oder 2, wobei das einheitliche Ladevolumen (18) einstückig durch das gesamte Gehäuse (12) angeordnet ist.

4. Gehäuse (12) mit einem einheitlichen Ladevolumen (18) nach einem der vorhergehenden Ansprüche, wobei das einheitliche Ladevolumen (18) dazu konfiguriert ist, eine vorbestimmte Druckluftladung zu fassen, die verwendet wird, um ein Anlaufen des Einweg-Gasturbinentriebwerks (10) einzuleiten.

5. Gehäuse (12) mit einem einheitlichen Ladevolumen (18) nach einem der vorhergehenden Ansprüche, wobei das einheitliche Ladevolumen (18) die gleiche Materialzusammensetzung wie das Gehäuse (12) umfasst.

6. Gehäuse (12) mit einem einheitlichen Ladevolumen (18) nach einem der vorhergehenden Ansprüche, ferner umfassend:
mindestens einen Holm, der sich zwischen der Innenwand (14) und der Außenwand (16) innerhalb des einheitlichen Ladevolumens (18) erstreckt.

7. Prozess zum Ausbilden eines Einweg-Gasturbinentriebwerksgehäuses (12) mit einem einheitlichen Ladevolumen (18), umfassend:
Ausbilden eines Gehäuses (12), das eine Innenwand (14) und einer der Innenwand (14) gegenüberliegende Außenwand (16) aufweist;
Ausbilden eines einheitlichen Ladevolumens (18), das mit dem Gehäuse (12) zwischen der Innenwand (14) und der Außenwand (16) einstückig ist; und
Ausbilden einer an dem Gehäuse (12) angebrachten Kupplung (26), die dazu konfiguriert ist, eine Druckluftquelle anzubringen, um eine Druckluftladung für das einheitliche Gehäuseladevolumen (18) aufzunehmen,
wobei das einheitliche Ladevolumen (18) dazu konfiguriert ist, eine vorbestimmte Druckluftladung zu fassen, die zum Einleiten eines Anlaufens des Einweg-Gasturbinentriebwerks (10) verwendbar ist.

8. Prozess nach Anspruch 7, wobei Ausbilden des Gehäuses (12) und des einheitlichen Ladevolumens (18) modellbasierte additive Fertigungstechniken umfasst.

9. Prozess nach Anspruch 7 oder 8, wobei Ausbilden des einheitlichen Ladevolumens (18) Folgendes umfasst:
Ändern von Prozessparametern zum Herstellen des einheitlichen Ladevolumens (18) innerhalb des Gehäuses (12) zwischen der Innenwand (14) und der Außenwand (16).

10. Prozess nach Anspruch 7, 8 oder 9, ferner umfassend:
Bestimmen des Isolationswertes des einheitlichen Ladevolumens (18) .

11. Prozess nach einem der Ansprüche 7 bis 10, wobei das einheitliche Ladevolumen (18) die gleiche Materialzusammensetzung wie das Gehäuse (12) umfasst.

12. Prozess nach einem der Ansprüche 7 bis 11, ferner umfassend:
Bestimmen einer vorgegebenen Eigenspannung des einheitlichen Ladevolumens (18);
Erstellen eines Dateigenerators; und
Bestimmen der Finite-Elemente-Lösung der Eigenspannung.

13. Prozess nach Anspruch 12, ferner umfassend:
Anordnen mindestens eines Holms zwischen der Innenwand (14) und der Außenwand (16) als Reaktion auf die Schritte nach Anspruch 12.

## Revendications

1. Carter (12) à volume de charge unitaire (18) pour un moteur à turbine à gaz sacrifiable (10) comprenant :
le volume de charge unitaire (18) défini à l'intérieur dudit carter (12) du moteur à turbine à gaz (10) ;
le volume de charge unitaire (18) comprenant une paroi extérieure (16) et une paroi intérieure (14) opposée à ladite paroi extérieure (16) ;
le volume de charge unitaire (18) étant formé d'un seul tenant avec ledit carter (12) ; et
un raccord (26) fixé audit carter (12) conçu pour fixer une source d'air comprimé pour recevoir une charge d'air comprimé pour ledit volume de charge unitaire (18) de carter.

2. Carter (12) à volume de charge unitaire (18) selon la revendication 1, dans lequel ledit volume de charge unitaire (18) comprend une structure (24) formée de manière unitaire avec le carter (12) conçue pour isoler ledit moteur à turbine à gaz sacrifiable (10).

3. Carter (12) à volume de charge unitaire (18) selon la revendication 1 ou 2, dans lequel ledit volume de charge unitaire (18) est disposé d'un seul tenant dans tout le carter (12).

4. Carter (12) à volume de charge unitaire (18) selon une quelconque revendication précédente, dans lequel ledit volume de charge unitaire (18) est conçu pour contenir une charge prédéterminée d'air comprimé utilisée pour initier un démarrage du moteur à turbine à gaz sacrifiable (10).

5. Carter (12) à volume de charge unitaire (18) selon une quelconque revendication précédente, dans lequel ledit volume de charge unitaire (18) comprend la même composition de matériau que ledit carter (12).

6. Carter (12) à volume de charge unitaire (18) selon une quelconque revendication précédente, comprenant en outre :
au moins un longeron s'étendant entre ladite paroi intérieure (14) et ladite paroi extérieure (16) à l'intérieur dudit volume de charge unitaire (18).

7. Procédé de formation d'un carter (12) de moteur à turbine à gaz sacrifiable à volume de charge unitaire (18) comprenant :
la formation d'un carter (12) présentant une paroi intérieure (14) et une paroi extérieure (16) opposée à ladite paroi intérieure (14) ;
la formation d'un volume de charge unitaire (18) solidaire dudit carter (12) entre ladite paroi intérieure (14) et ladite paroi extérieure (16) ; et
la formation d'un raccord (26) fixé audit carter (12) conçu pour fixer une source d'air comprimé pour recevoir une charge d'air comprimé pour ledit volume de charge unitaire (18) de carter,
dans lequel ledit volume de charge unitaire (18) est conçu pour contenir une charge prédéterminée d'air comprimé utilisable pour initier un démarrage du moteur à turbine à gaz sacrifiable (10).

8. Procédé selon la revendication 7, dans lequel la formation dudit carter (12) et dudit volume de charge unitaire (18) comprend des techniques de fabrication additive à base de modèles.

9. Procédé selon la revendication 7 ou 8, dans lequel la formation dudit volume de charge unitaire (18) comprend :
la modification de paramètres de procédé pour produire ledit volume de charge unitaire (18) à l'intérieur dudit carter (12) entre ladite paroi intérieure (14) et ladite paroi extérieure (16) .

10. Procédé selon la revendication 7, 8 ou 9, comprenant en outre :
la détermination de la valeur d'isolation du volume de charge unitaire (18).

11. Procédé selon l'une quelconque des revendications 7 à 10, dans lequel ledit volume de charge unitaire (18) comprend la même composition de matériau que ledit carter (12).

12. Procédé selon l'une quelconque des revendications 7 à 11, comprenant en outre :
la détermination d'une contrainte interne prédéterminée dudit volume de charge unitaire (18) ;
la construction d'un générateur de fichiers ; et
la détermination de la solution d'éléments finis de la contrainte interne.

13. Procédé selon la revendication 12, comprenant en outre :
le positionnement d'au moins un longeron entre ladite paroi intérieure (14) et ladite paroi extérieure (16) en réponse aux étapes de la revendication 12.
